Europäisches Patentamt

European Patent Office

Office européen des brevets

(11) Veröffentlichungsnummer: **0 269 790 B1**

## (12) EUROPÄISCHE PATENTSCHRIFT

(45) Veröffentlichungstag der Patentschrift: **21.10.92**

(21) Anmeldenummer: **87111619.0**

(22) Anmeldetag: **11.08.87**

(51) Int. Cl.⁵: **G01S 3/78**

(54) **Warnvorrichtung für Laserstrahlung.**

(30) Priorität: **29.11.86 DE 3640946**

(43) Veröffentlichungstag der Anmeldung:
**08.06.88 Patentblatt 88/23**

(45) Bekanntmachung des Hinweises auf die
Patenterteilung:
**21.10.92 Patentblatt 92/43**

(84) Benannte Vertragsstaaten:
**DE ES FR GB IT SE**

(56) Entgegenhaltungen:
**DE-A- 2 830 308      FR-A- 1 522 467
FR-A- 2 339 176      FR-A- 2 454 628
US-A- 3 304 425      US-A- 3 611 385**

(73) Patentinhaber: **ELTRO GmbH Gesellschaft für
Strahlungstechnik
Kurpfalzring 106 Postfach 10 21 20
W-6900 Heidelberg 1(DE)**

(72) Erfinder: **Köhler, Ludwig
Rockenauer Pfad 4
W-6909 Walldorf(DE)**

(74) Vertreter: **Muschka, Wilhelm, Dipl.-Ing.
Eltro GmbH Gesellschaft für Strahlungstechnik Kurpfalzring 106 Postfach 10 21 20
W-6900 Heidelberg 1(DE)**

## Beschreibung

Die Erfindung bezieht sich auf eine Warnvorrichtung für militärische Objekte vor Laserstrahlung gegnerischer Waffensysteme nach dem Oberbegriff des Anspruchs 1.

Eine solche Warnvorrichtung ist aus dem Dokument US 3 611 385 bekannt. Diesem Dokument ist jedoch kein Hinweis auf einen Mosaikdetektor zu entnehmen und wie die Mosaikdetektoren mit den ihnen zugeordneten Blenden zusammenwirken.

Eine andere Warnvorrichtung ist Gegenstand der DE-AS 28 52 224 für den sichtbaren und nahen IR-Bereich, das heißt also z.B. für einen Nd-YAG-Laser mit der Wellenlänge $1,06\mu$.

Die Aufgabe der Erfindung besteht in der Verbesserung der an sich bekannten Vorrichtung dahingehend, daß mit möglichst wenig Detektoreinzelelementen und einer platzsparenden Konzeption möglichst viele Raumwinkelintervalle lückenlos unterschieden werden können. Diese Aufgabe wird erfindungsgemäß durch die im Kennzeichen des Anspruchs 1 genannten Merkmale gelöst. Bei einer solchen Lösung erübrigt sich die Verwendung einer Optik, was zu einer wirtschaftlichen und raumsparenden Bauweise führt.

Die Unteransprüche enthalten Weiterbildungen der Erfindung.

Im Folgenden werden anhand einer Zeichnung Ausführungsbeispiele der Erfindung näher erläutert, wobei die in den einzelnen Figuren einander entsprechenden Teile dieselben Bezugszeichen aufweisen. Es zeigt

Fig. 1      einen Schnitt in Azimut bzw. Elevation durch die Raumkugel und einen zum Zweck der Unterteilung der Raumkugel eingeschriebenen Würfel,

Fig. 2      die Seitenansicht von Laserstrahl, Blende und Mosaik (links im Bild) sowie die Vorderansicht von Mosaik und Laserstrahlquerschnitt (rechts im Bild) mit jeweils verschiedenen Einfallswinkeln, und

Fig. 3      die Koordinaten des Richtungsvektors, der auf Detektorseite vom Blendenmittelpunkt zum Mittelpunkt des Laserstrahlquerschnittes zeigt.

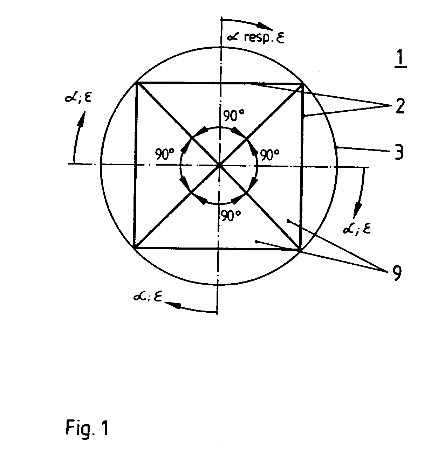

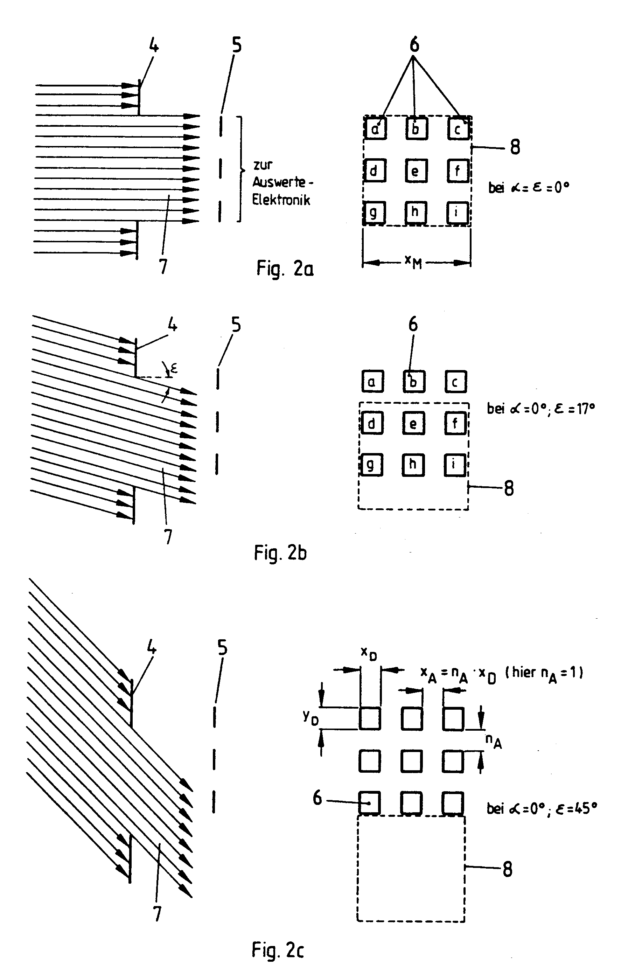

Um die Richtung der Laserstrahlung 7, die aus der gesamten Sphäre einfallen kann, zu bestimmen, wird die gesamte Sphäre zunächst in sechs Teilbereiche unterteilt. Man denke sich hierzu in die Mitte des Würfels 1 versetzt. Die Raumwinkel der sechs Teilbereiche werden dann von den sechs Seitenflächen 2 dieses Würfels aufgespannt. In Azimut und Elevation wird der entsprechende Großkreis 3 der Sphäre daher in 4 x 90° unterteilt, wie des in Fig. 1 veranschaulicht ist. Jeder einzelne dieser sechs Teilbereiche wird nochmals in 5 x 5 Unterbereiche zu je 18° in Azimut und Elevation unterteilt. Als Richtungsdetektor für je einen der sechs Teilbereiche wird eine Anordnung nach Fig. 2 verwendet. Sie besteht im Prinzip aus einer quadratischen Blende 4 (Fenster), einem Detektormosaik 5 aus $n_D$ x $n_D$ Detektoreinzelelementen 6 sowie der zugehörigen, in der Zeichnung nicht näher dargestellten Auswertelektronic. $n_D$ wird vorzugsweise gleich drei gesetzt. Beschreibt man sodann die Mosaikabmessungen $x_M/y_M$ in x- bzw. y-Richtung als Vielfaches $n_M$ der Detektorabmessung $x_D$ bzw. $y_D$, also z.B. $x_M = n_M \cdot x_D$, so ist die zwecks Erhaltung gleichmäßiger unterscheidbarer Intervalle zu wählende Blendenabmessung $x_B, y_B$ durch die Beziehung $x_B = n_B \cdot x_D$ gegeben, wenn $n_B = n_M + n_A - 1$ und $n_A = (n_M - n_D)/2$ bei dem 3 x 3 Mosaik gestezt wird. $n_A$ stellt das Verhältnis des Abstandes $x_A$ zwischen den Detektoreinzelelementen und $x_D$ dar. Entsprechendes gilt in y-Richtung. Die Erfindung beschränkt sich nicht auf dieses Ausführungsbeispiel. Bei anderen Werten von $n_D$ gelten entsprechende Maßnahmen.

Die quadratische Blende 4 schneidet aus der ankommenden Laserstrahlung 7 einen quadratischen Querschnitt 8 heraus. Die Lage dieses Querschnittes bzw. die seines Mittelpunktes in der zur Blendenebene parallelen Detektorebene ist ein Maß für die Laserstrahlrichtung. In Fig. 2a ist der Fall $\alpha = \epsilon = 0°$ gezeichnet. Mit $\alpha$ für den Einfallwinkel der Laserstrahlung 7 im Azimut und in der Elevation bedeckt der Laserstrahlquerschnitt 8 alle neun Detektoreinzelelemente 6 bzw. a bis i. Sprechen also alle in einer logischen Schaltung miteinander verbundenen Detektoreneinzelelemente an, so wird die Richtung $\alpha = \epsilon = 0°$ angezeigt.

In Fig. 2b ist willkürlich der Fall $\alpha = 0°$, $\epsilon = 17°$ gezeichnet. Der Laserstrahlquerschnitt 8 ist entsprechend verschoben, so daß die Detektoreinzelelemente 6 bzw. d bis i das entsprechende Richtungssignal mit der unten noch zu diskutierenden Genauigkeit liefern.

In Fig. 2c ist der Grenzfall $\alpha = 0°$, $\epsilon = 45°$ gezeigt. Hier sprechen gerade keine Detektoreinzelelemente 6 mehr an, während kurz vorher, z.B. bei $\alpha = 0°$, $\epsilon = 44°$, noch die Elemente g, h und i ein Signal liefern.

Entsprechendes gilt für beliebige Winkel $\alpha$ und $\epsilon$, die kleiner oder gleich 45° sind. Eine genauere Untersuchung dieser Anordnung zeigt, daß in Azimut und Elevation je fünf Bereiche unterschieden werden können. Somit ist eine Richtungsauflösung von $90° : 5 = 18°$ in Azimut und Elevation möglich.

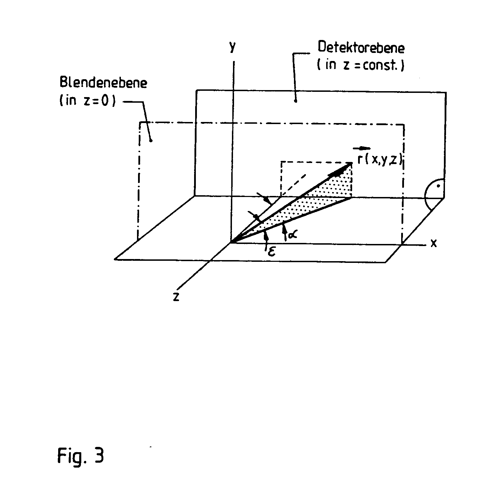

Der Richtungsvektor $\vec{r}$, der auf der Detektorseite vom Blendenmittelpunkt zum Mittelpunkt des Laserstrahlquerschnittes 8 zeigt, wird nach Fig. 3 durch die Bezeichnungen

$$\vec{r} = \sqrt{x^2 + y^2 + z^2}$$

$$\tan \alpha = \frac{x}{z}$$

$$\tan \varepsilon = \frac{y}{\sqrt{x^2 + z^2}}$$

beschrieben, wobei x, y und z die Koordinaten des Richtungsvektors darstellen.

Die nichtlineare Beziehung zwischen $\alpha$ und $\chi$ bzw. zwischen x, y einerseits und $\varepsilon$ andererseits bewirkt hauptsächlich im diagonalen Randbereich des sich aus den Detektoreinzelelementen 6 zusammensetzenden Mosaiks eine gewisse, jedoch relativ geringe Verschiebung der entsprechenden Raumwinkelintervalle vom gewünschten Sollwert. Dies wird beispielsweise dadurch korrigiert, daß die Höhe $y_D$ und Breite $x_D$ (Fig. 2c) der Detektoreinzelelemente 6 - vor allem an den Mosaikecken-entsprechend verändert wird. Eine zweite Möglichkeit besteht darin, das Mosaik durch vier weitere Einzelelemente auf den beiden Mosaikdiagonalen zu erweitern.

Schließlich kann auch ein 5 x 5 Elementen-Mosaik verwendet werden. Mit einem solchen Mosaik können $(2 \cdot 5-1)^2 = 81$ Raumwinkelintervalle unterschieden werden, wenn die Größe der Blendenfläche der 5 x 5-Elementen-Mosaikfläche angepaßt wird. Entspricht jedoch die Blendenfläche der Fläche des 3 x 3-Elementenmosaiks, so können wie vorher $(2 \cdot 3-1)^2 = 25$ Raumwinkelintervalle unterschieden werden, wobei aber jetzt die $\alpha$ - und $\varepsilon$ -Korrektur schon weitgehend durch die Anordnung selbst verwirklicht ist. Der Vollständigkeit wegen sei noch erwähnt, daß auch ein Mosaik verwendet werden kann, bei dem die Elementabstände nicht, wie in Fig. 2 angedeutet, gleich der Elementengröße, sondern $n_A \cdot x_D$ bzw. $n_A \cdot y_D$ sein können. Hierbei kann $n_A < 1$, aber auch erheblich größer als 1 sein.

Das hier beschriebene Prinzip der Richtungsdetektion mittels eines Detektormosaiks und einer im Vergleich zur Abmessung des Detektoreinzelelements relativ große Blendenfläche ermöglicht es, mit einem $n_D$ x $n_D$ Mosaik aus relativ wenigen Detektoreinzelelementen relativ viele Raumwinkelintervalle lückenlos zu unterscheiden, nämlich $(2 n_D-1)^2$.

Die Blende 4, welche hier nur die Funktion einer Optik ersetzt, braucht nicht oder nicht wesentlich größer zu sein als das Detektormosaik selbst. Daher können auch für verschiedene Spektralbereiche - in zeichnerisch allerdings nicht näher dargestellter Weise - mehrere Kanäle relativ eng nebeneinander aufgebaut werden, so daß verschiedene Laserarten detektiert werden können. Um für verschiedene Wellenlängenbereiche Kanäle einzusparen, kann für je zwei Bereiche ein sog. Zwei-Farben-Mosaik in Sandwichbauweise verwendet werden. Der Abstand der beiden Chips beträgt hierbei z.B. 0,5 mm, so daß das vorher beschriebene Prinzip, bei dem ein bestimmter Abstand zwischen Detektor- und Blendenebene eingehalten werden muß, auch in dieser Sandwichanordnung beibehalten werden kann, da bei entsprechender Auslegung der Mosaikgrößen dieser Abstand groß im Vergleich zu dem 0,5 mm-Chipabstand ist.

Wie eingangs erwähnt, ist die Anordnung nach Fig. 2 zur Abdeckung eines der sechs Teilbereiche ausgelegt, in die die Raumkugel eingeteilt wurde. Um sämtliche sechs Teilbereiche zu überwachen, können entweder sechs solcher Sektoren 9 an den sechs Seiten z.B. eines Flugzeuges angebracht werden, ober es können verschiedene Sektoren, z.B. bis zu fünf, zu einem Gerät zusammengefaßt werden, welches dann fünf Seiten des eingangs erwähnten Raumwürfels 1 überwacht. Das entgegengesetzt angebrachte Gerät kann dann entweder nur aus dem sechsten noch fehlenden Sektor bestehen, aber auch durch weitere vier Teilbereiche ergänzt werden, wobei dann diese vier Teilbereiche gemeinsam mit dem ersten Fünfergerät redundant überwacht werden.

Das hier beschriebene Prinzip der Strahlungsdetektion ohne die Verwendung einer strahlungssammelnden Optik setzt voraus, daß die Empfindlichkeit der Detektoreinzelelemente ausreicht, um genügend viel Strahlungsleistung aus der vom Laserstrahl erzeugten Bestrahlungsstärke in ein Signal umzuwandeln.

In der Praxis kann auch der Weg der Laserstrahlung 7 zwischen Blende 4 und Mosaik bzw. dessen Detektoren 5, die sich z.B. im Inneren eines Fahrzeugs befinden, mit einem entsprechend ausgelegten Faseroptikbündel überbrückt werden. Auf diese Weise läßt sich einmal die Strahlung nach einem beliebig angeordneten Zentralgerät führen und zum anderen eine Platzersparnis erzielen, da die Verarbeitungselektronik nach dem Zentralgerät verlegt werden kann.

**Patentansprüche**

1. Warnvorrichtung für militärische Objekte vor Laserstrahlung gegnerischer Waffensysteme, bei der Richtungsdetektoren - bestehend aus Detektoren (5) und dazu in einem bestimmten Abstand parallel angordneten Blenden (4) zur Begrenzung der Sehfelder - mit einer Auswerteelektronik versehen sind, wobei die gesamte Sphäre in sechs Richtungssektoren (9), ausgehend von einem sich in der Mitte des Objektes gedachten Mittelpunkt eines Raumwürfels (1), unterteilt ist und jedem Richtungssektor ein Richtungsdetektor zugeordnet ist und die Richtungsdetektoren an sechs Seiten des Objektes derart angebracht sind, daß die sechs Seiten des Raumwürfels überwacht werden, **dadurch gekennzeichnet,** daß

    a) die Detektoren (5) aus mehreren, ein Mosaik bildenden, annähernd gleichgroßen, symmetrisch angeordneten, rechteckigen Detektoreinzelelementen (6) mit gleichmäßigen oder hinsichtlich Azimut und Elevation unterschiedlichen Abständen bestehen,

    b) jede der Blenden (4) quadratisch ausgebildet ist und

    c) der Durchlaßbereich der Blende (4) den Abmessungen der Seitenfläche (2) angepaßt ist und dessen hindurchgelassener Strahlenquerschnitt (8) hinsichtlich seiner Lage zur Ebene der Detektoreinzelelemente (6) ein Maß für die Laserstrahlenrichtung darstellt.

2. Warnvorrichtung nach Anspruch 1, **dadurch gekennzeichnet,** daß die Detektoren (5) in 5 x 5 Teilbereiche mit jeweils 3 x 3 oder 5 x 5 Detektoreneinzelelementen (6) untergliedert sind, denen $(2 \cdot 3 - 1)^2 = 25$ bzw. $(2 \cdot 5 - 1)^2$ Raumwinkelintervalle entsprechen.

3. Warnvorrichtung nach einem der Ansprüche 1 und 2, **dadurch gekennzeichnet,** daß wenigstens die Detektoreinzelelemente (6) in den Eckbereichen der ein Mosaik bildenden Detektoren (5) unterschiedliche Kantenlängen aufweisen.

4. Warnvorrichtung nach einem der Ansprüche 1 und 2, **dadurch gekennzeichnet,** daß auf den Diagonalen der Detektoren (5) noch zusätzliche Detektoreinzelelemente (6) vorgesehen sind.

5. Warnvorrichtung nach einem der vorausgehenden Ansprüche, **dadurch gekennzeichnet,** daß zwecks Unterscheidung von Spektralbereichen entweder die Detektoreinzelelemente (6) in den zu empfangenden Wellenlängenbereichen in entsprechende Kanäle unterteilt sind oder aber sogenannte Zwei-Farben-Mosaiks in Sandwich-Bauweise Verwendung finden.

6. Warnvorrichtung nach Anspruch 5, **dadurch gekennzeichnet,** daß bei einem Zwei-Farben-Mosaik der Abstand der für die beiden Kanäle verwendeten Chips mit z.B. 0,5 mm klein ist im Verhältnis zu demjenigen der ein Mosaik bildenden benachbarten Detektoren (5).

**Claims**

1. Device for warning military objects against laser radiation from enemy weapon systems, in which directional detectors, comprising detectors (5) and diaphragms (4) disposed at a predetermined distance parallel thereto to restrict the field of view, are provided with analysis electronics, wherein the entire sphere is subdivided into six direction segments (9) starting from a centre point of a cube (1) in space, the centre point being imagined to be in the middle of the object, and each direction segment has a directional detector, and the directional detectors are disposed on six sides of the object in such a way that the six sides of the cube are monitored, characterised in that:

    a) the detectors (5) comprise a plurality of symmetrically disposed, rectangular individual detector elements (6) of approximately the same size, forming a mosaic, the elements being at uniform distances, or at different distances with respect to azimuth and elevation;

    b) each of the diaphragms (4) is square; and

    c) the transmitting region of the diaphragm (4) is adapted to the dimensions of the side face (2) and the radiation cross section (8) thereof which is allowed to pass through, with regard to the position thereof on the plane of the individual detector elements (6), constitutes a measure for the laser radiation direction.

2. Warning device according to claim 1 characterised in that the detectors (5) are subdivided into 5 x 5 sections each with 3 x 3 or 5 x 5 individual detector elements (6) to which correspond $(2 \times 3 - 1)^2 = 25$ or $(2 \times 5 - 1)^2$ spatial angle intervals.

3. Warning device according to either of claims 1 and 2, characterised, in that at least the individual detector elements (6) in the corner areas of the detectors (5) forming a mosaic have different edge lengths.

4. Warning device according to either of claims 1 and 2, characterised in that additional individual detector elements (6) are disposed on the diagonals of the detectors (5).

5. Warning device according to any one of the preceding claims, characterised in that, for the purpose of differentiating between spectral regions, either the individual detector elements (6) are subdivided into corresponding channels in the regions of the wavelengths to be received, or so-called two-colour mosaics are used in a sandwich structure.

**6.** Warning device according to claim 5, characterised in that in a two-colour mosaic, the spacing of the chips used for both channels, of for example 0.5 mm, is small in relation to that of the adjacent detectors (5) forming a mosaic.

**Revendications**

**1.** Dispositif d'alarme pour appareils militaires vis-à-vis d'un rayonnement laser de systèmes d'armes ennemis, dans lequel des détecteurs de direction se composant de détecteurs (5) et, en outre, de diaphragmes (4) disposés parallèlement à une certaine distance pour délimiter le champ visuel, sont munis d'une électronique de traitement, la sphère totale étant subdivisée en six secteurs de direction (9), à partir d'un centre, considéré au milieu de l'appareil, d'un cube (1), un détecteur de direction étant associé à chaque section de direction et les détecteurs de direction étant fixés sur les six faces de l'appareil de telle façon que les six faces du cube sont surveillées, caractérisé en ce que

　　(a) les détecteurs (5) se composent de plusieurs éléments séparés de détection (6) rectangulaires, approximativement de même taille, disposés de manière symétrique, formant une mosaïque avec des écarts égaux ou différents en ce qui concerne l'azimut et le site ;

　　(b) chacun des écrans (4) est formé de manière carrée ; et

　　(c) la zone de passage de l'écran (4) est adapté aux dimensions de la surface latérale (2) et dont la coupe transversale de rayon laser (8) que l'on laisse passer représente une mesure de la direction du rayonnement laser pour ce qui est de sa position sur le plan des éléments séparés de détection (6).

**2.** Dispositif d'alarme suivant la revendication 1, caractérisé en ce que les détecteurs (5) sont subdivisés en 5 x 5 zones partielles avec selon le cas 3 x 3 ou 5 x 5 éléments séparés de détection (6), qui correspondent à $(2.3-1)^2 = 25$ respectivement $(2.5-1)^2$ intervalles d'angles solides.

**3.** Dispositif d'alarme suivant les revendications 1 et 2, caractérisé en ce qu'au moins les éléments séparés de détection (6) dans les zones de coin des détecteurs (5) formant une mosaïque présentent des longueurs d'arête différentes.

**4.** Dispositif d'alarme suivant l'une des revendications 1 et 2, caractérisé en ce que des éléments séparés de détection (6) supplémentaires sont prévus sur les diagonales des détecteurs (5).

**5.** Dispositif d'alarme suivant l'une des revendications précédentes, caractérisé en ce que dans le but de différencier des gammes de spectre, soit les éléments séparés de détection (6) sont subdivisés en canaux correspondants aux gammes de longueurs d'ondes à recevoir, soit des mosaïques à deux couleurs de fabrication en sandwich sont utilisées.

**6.** Dispositif d'alarme suivant la revendication 5, caractérisé en ce que dans la mosaïque à deux couleurs l'écart entre les microplaquettes utilisées pour les deux canaux est petit, par exemple 0,5 mm, comparé aux détecteurs (5) voisins formant une mosaïque.

Fig. 1

zur
Auswerte-
Elektronik

bei $\alpha = \varepsilon = 0°$

## Fig. 2a

bei $\alpha = 0°$; $\varepsilon = 17°$

## Fig. 2b

$x_A = n_A \cdot x_D$ (hier $n_A = 1$)

bei $\alpha = 0°$; $\varepsilon = 45°$

## Fig. 2c

7

Fig. 3